# FASCICULE DE BREVET EUROPEEN

(11) **EP 0 524 884 B1**
(45) Date de publication et mention de la délivrance du brevet: **21.01.1998**
(21) Numéro de dépôt: 92402129.8
(22) Date de dépôt: 23.07.1992
(51) Int. Cl.: H04N 3/15

(54) **Dispositif de prise ou d'affichage d'images en grande dimension**
Vorrichtung zur grossdimensionierten Bildaufnahme oder -wiedergabe
Pick-up or display device for large images

(30) Priorité: 26.07.1991 FR 9109503
(43) Date de publication de la demande: 27.01.1993
(73) Titulaire: COMMISSARIAT A L'ENERGIE ATOMIQUE, 75015 Paris (FR)
(72) Inventeur: Poujois, Robert, F-38650 Sinard (FR)
(74) Mandataire: Dubois-Chabert, Guy

(56) Documents cités:
- EP-A- 0 086 619
- EP-A- 0 245 147
- EP-A- 0 421 869
- DE-A- 3 835 700
- US-A- 4 253 120
- PATENT ABSTRACTS OF JAPAN vol. 13, no. 92 (E-722)(3440) 3 Mars 1989 & JP-A-63 268 267
- PATENT ABSTRACTS OF JAPAN vol. 12, no. 322 (E-652)31 Août 1988 & JP-A-63 086 479

## Description

La présente invention a pour objet un dispositif de prise ou d'affichage d'images en grande dimension, nommé également rétine dans le cas de la prise d'images.

Elle s'applique notamment aux rétines de caméras destinées à la détection de rayonnements non focalisables, tels que les rayons X ou les rayons gamma particulièrement utilisés dans les domaines médicaux de la radiologie et de l'imagerie nucléaire. L'invention a également des applications industrielles avec, en particulier, l'analyse de l'état de pièces métalliques et la réalisation d'écrans de visualisation.

Dans le cas de la prise d'images, et pour des applications où les rayonnements sont non focalisables, il est nécessaire que la rétine soit de la même taille que l'objet projeté par la source de particules (rayons X, gamma), l'image pouvant comporter 4 000 x 4 000 éléments élémentaires de la rétine. Les rétines de type connu utilisées dans le dispositif selon l'invention, ont une dimension comprise entre environ 1 et 16 dm², ce qui nécessite d'organiser plusieurs de ces rétines ensemble pour obtenir une rétine de grande dimension.

Un dispositif de prise de vue comportant plusieurs modules est décrit dans le document EP-A-0 245 147. Selon ce document, chaque module comporte ses propres moyens d'adressage situés dans le même plan que les éléments sensibles.

Un autre dispositif, dans lequel sont associées plusieurs de ces rétines, est décrit dans la demande de brevet publiée sous le numéro FR-A-2 652 655. Selon ce document, les rétines utilisées sont organisées, telles des tuiles, c'est-à-dire qu'elles sont en partie superposées.

En effet, les dispositifs de prise ou d'affichage d'images connus comportent une matrice d'éléments élémentaires ou pixels présentant une surface sensible adaptée à un rayonnement déterminé (infrarouge, visible, rayons X ou gamma) ou à un type d'affichage choisi.

Cette matrice se décompose en une matrice active constituée par des circuits micro-électroniques et des lignes et des colonnes conductrices, et en une surface sensible constituée par autant d'éléments sensibles que d'éléments de la matrice.

Ces éléments sensibles peuvent être plus petits que le pas de la matrice. Ils peuvent être, par ailleurs, disposés soit sur le même plan que la matrice active (c'est-à-dire intégrés à la matrice active), soit sur un autre plan que celle-ci (cas le plus fréquent), lorsque ces éléments sensibles sont rapportés ou disposés sur la surface du circuit intégré constituant la matrice active.

Qu'il s'agisse d'un dispositif de prise de vue ou d'un dispositif d'affichage d'images, leurs fonctionnements sont à peu près similaires.

Un dispositif de prise de vues présente une matrice, dans laquelle chacun des éléments élémentaires comprend un élément sensible tel qu'une photodiode. Les éléments élémentaires de matrices sont ordonnés suivant des lignes et des colonnes, les éléments sensibles étant connectés à des circuits micro-électroniques et à des lignes et des colonnes conductrices. Sous l'effet d'un rayonnement incident, les éléments sensibles délivrent des signaux électriques transformés en signal vidéo par les circuits micro-électroniques.

Un dispositif d'affichage d'images, ou écran, reçoit un signal vidéo sur des entrées de circuits micro-électroniques qui le transforment en signaux électriques appliqués aux éléments sensibles de l'écran par l'intermédiaire de lignes et de colonnes conductrices. Les éléments sensibles de l'écran, arrangés en lignes et en colonnes, comprennent un matériau électro-optique (à cristal liquide, par exemple) dont la propriété optique est modifiée sous l'effet du signal électrique qui lui est appliqué pour permettre la visualisation d'une information.

Dans toute la suite de la description, on décrira en particulier le cas d'un dispositif de prise d'images, sachant que l'invention s'applique plus particulièrement à ce type de dispositif.

Il faudra lire, dans la suite du texte, indifféremment pixels, points images, points élémentaires ou éléments élémentaires de la rétine.

Par ailleurs, les circuits micro-électroniques cités précédemment se décomposent en circuits de conditionnement et en circuits d'adressage. Dans le cas de la prise d'images, ces circuits de conditionnement comprennent essentiellement, pour chaque élément sensible associé, un interrupteur relié, d'une part, à cet élément par un amplificateur et, d'autre part, à une ligne et à une colonne conductrices et éventuellement un circuit d'initialisation de l'élément sensible. Dans le cas de l'affichage d'images, ces circuits de conditionnement comprennent, pour chaque élément sensible, un interrupteur relié, d'une part, à cet élément et, d'autre part, à une ligne et à une colonne conductrices. Par ailleurs, dans le cas de la prise ou de l'affichage d'images, les circuits d'adressage se décomposent en circuits d'adressage colonnes reliés aux colonnes conductrices de la matrice et en circuits d'adressage ligne reliés aux lignes conductrices de la matrice.

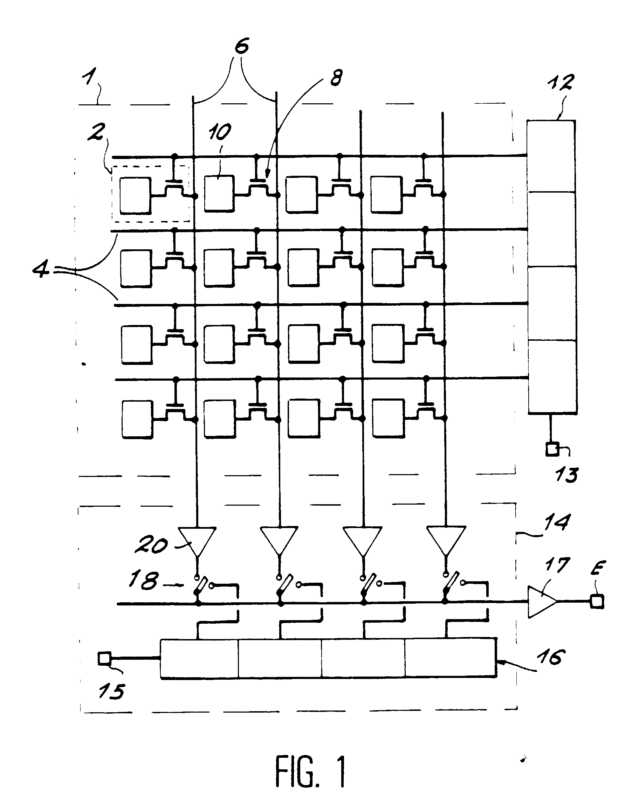

Sur la figure 1, on a représenté une matrice connue, utilisée dans le dispositif selon l'art antérieur et dont le fonctionnement est quasiment similaire aux matrices utilisées dans le dispositif selon la présente invention.

Par souci de simplification, la matrice représentée sur la figure 1 ne comprend qu'un nombre limité de pixels, à savoir seize pixels, c'est-à-dire seize éléments sensibles associés chacun à un circuit micro-électronique. La description de cette matrice sera relativement sommaire car tout à fait connue de l'homme de l'art.

De façon plus détaillée, la matrice est composée d'une zone sensible 1 comportant des pixels 2 juxtaposés, connectés à des lignes 4 conductrices, des colonnes 6 conductrices et des circuits d'adressage 12, 14. Les pixels 2 sont placés aux intersections des lignes et colonnes conductrices.

Chaque pixel 2 comprend, dans cet exemple, un élément sensible 10 et un circuit de conditionnement 8 réduit dans cet exemple à un interrupteur de sélection réalisé, par exemple, par un transistor connecté à une ligne conductrice 4, à une colonne conductrice 6 et audit élément sensible 10.

Cet élément sensible 10 peut occuper, comme représenté sur la figure 1, une partie de la surface du pixel, lorsqu'il est réalisé dans le même substrat que les circuits de conditionnement et d'adressage qui lui sont associés, ou au plus la totalité du pixel, lorsque l'élément sensible est réalisé à partir d'une couche distincte de celle des circuits de conditionnement et d'adressage. Dans ce dernier cas, les éléments sensibles sont disposés au-dessus desdits circuits et des conducteurs lignes et colonnes.

Les transistors 8 sont adressés séquentiellement, ligne à ligne par l'intermédiaire d'un circuit d'adressage 12 des lignes et d'un circuit d'adressage 14 des colonnes.

Le circuit d'adressage 12 des lignes sélectionne les lignes 4 successivement, par l'intermédiaire d'une horloge ligne 13, en portant les transistors à un potentiel déterminé permettant de rendre lesdits transistors conducteurs.

Dans le cas de la prise d'images, le circuit d'adressage 14 des colonnes, pendant le temps de sélection d'une ligne, relie successivement, grâce à l'horloge-colonne 15, les transistors 8 de cette ligne à la sortie vidéo E de la matrice, en fermant des interrupteurs 18 grâce à un circuit de commande 16 (tel qu'un registre à décalage) relié à ces interrupteurs. Le signal électrique issu de la sortie vidéo E provient donc de l'élément sensible 10 sélectionné grâce aux interrupteurs 18 après avoir été amplifié par les amplificateurs 20.

Le circuit d'adressage des colonnes 14 peut aussi recueillir simultanément les signaux de tous les éléments sensibles d'une ligne 4 adressée. Dans ce cas, les amplificateurs 20 comportent une mémoire que le circuit 16 peut venir lire séquentiellement.

Les circuits d'adressage 12 et 14, intégrés à la matrice active, occupent généralement une bande de 100 à 200 microns de large sur les bords de la matrice.

L'existence de ces bandes contenant les circuits d'adressage créerait des bandes d'ombre si on posait simplement côte-à-côte plusieurs de ces matrices pour créer un écran de grande dimension.

L'existence même desdites bandes a conduit les inventeurs du brevet antérieur précédemment cité à organiser ces matrices d'une façon comparable à l'organisation de tuiles sur un toit de maison. En effet, chaque matrice comprend des circuits d'adressage situés sur un ou deux bords de la matrice, empêchant que tous les bords soient formés par la zone sensible. Deux possibilités sont alors offertes dans cet art antérieur : soit disposer les matrices de façon à ce que leurs zones sensibles soient côte à côte, ce qui limite le nombre de matrices à quatre ou à n x 2 (n étant le nombre de matrices alignées sur une rangée), si les circuits d'adressage sont regroupés sur un seul bord, soit organiser les matrices comme des tuiles.

Dans cette dernière réalisation de l'art antérieur, la zone sensible d'une matrice recouvre un circuit d'adressage d'une autre matrice. Les matrices sont donc assemblées selon des plans différents, se chevauchant les unes et les autres.

Cette organisation des matrices a notamment pour inconvénient de présenter des zones d'ombres et de pertes d'informations de pixels dues à l'épaisseur des différents plans des matrices. Ces zones d'ombres peuvent être limitées en chanfreinant le bord des zones sensibles qui chevauchent les circuits d'adressage, ce procédé de chanfreinage étant très délicat et d'un coût onéreux.

La présente invention a justement pour objet un dispositif d'affichage d'images ou de prise de vues dans lequel une pluralité de matrices peut être organisée selon un même plan, c'est-à-dire accolées bord à bord. Ainsi, les circuits d'adressage qui, dans l'art antérieur, bordent la zone sensible de la matrice sont disposés différemment dans les matrices selon l'invention.

Le dispositif suivant l'invention est défini par la revendication 1.

Les circuits d'adressages de chaque matrice sont intégrés sur un substrat semi-conducteur (en silicium, par exemple) selon des principes de microélectronique connus, tels que les technologies CMOS ou bipolaire.

Cette intégration desdits circuits d'adressage permet, notamment, un gain de place par rapport, par exemple, à des circuits d'adressage imprimés.

De façon plus précise, la présente invention a pour objet un dispositif de prise ou d'affichage d'images en grande dimension comprenant une pluralité de matrices de prise ou d'affichage d'images comportant respectivement des éléments sensibles connectés par des circuits de conditionnement à des lignes et des colonnes conductrices, elles-mêmes connectées à des circuits d'adressage desdites matrices, caractérisé par le fait que ces matrices sont accolées bord à bord, les circuits d'adressage et les circuits de conditionnement d'une matrice étant intégrés sur un substrat semi-conducteur et disposés dans des zones situées sous les éléments sensibles de ladite matrice, chacune de ces zones comportant, d'une part, une zone active contenant un circuit de conditionnement et une partie d'une ligne et d'une colonne conductrices associées audit élément sensible et, d'autre part, une zone inactive, les circuits d'adressage de la matrice étant, au moins en partie, implantés dans lesdites zones inactives.

Avantageusement, la zone inactive d'un élément sensible est avantageusement assemblée avec au moins une autre zone inactive de façon à créer des zones inactives de tailles sensiblement plus importante.

Dans le dispositif suivant l'invention, certaines zones actives sont rendues inactives par destruction de leur circuit de conditionnement respectif, les circuits d'adressage de la matrice étant alors, au moins en partie, implantés dans ces zones rendues inactives.

Le terme de destruction est employé ici abusivement car en réalité pour rendre une zone inactive, on s'abstient d'implanter l'électronique initialement prévue dans cette zone.

Une zone rendue inactive, appelée aussi zone détruite, est assemblée avec au moins une autre zone rendue inactive de façon à créer des zones rendues inactives de taille sensiblement plus importante.

De façon particulière, les dispositifs suivant l'invention comprennent des moyens, externes aux matrices actives, pour reconstituer des informations à associer aux éléments sensibles associés à une zone détruite. Ces informations sont obtenues par moyenne des informations provenant des éléments sensibles voisins associés à une zone active.

De façon avantageuse, les circuits d'adressage des matrices sont divisés en sous-circuits d'adressage implantés dans plusieurs zones inactives et/ou zones rendues inactives.

Selon un mode de réalisation de l'invention, les matrices comprennent une couche métallique gravée, recouvrant une partie de la face arrière et des bords desdites matrices et assurant une connexion électriques desdites matrices avec des éléments externes tels que des alimentations et des moyens de traitement.

Selon un autre mode de réalisation de l'invention, les matrices comprennent des trous métallisés traversant lesdites matrices et assurant une connexion électrique desdites matrices par leur face arrière. Ces trous métallisés sont situés, de préférence, dans les zones détruites de la matrice.

Les caractéristiques et avantages cités précédemment ressortiront mieux de la description qui va suivre, donnée à titre illustratif et nullement limitatif en référence aux dessins dans lesquels :
- la figure 1, déjà décrite, représente schématiquement une matrice connue ;
- la figure 2 représente schématiquement une autre matrice connue utilisée dans le cas de la prise d'images ;
- la figure 3 représente un schéma d'un élément de matrice selon l'invention ;
- la figure 4 représente un exemple de disposition selon l'invention des circuits d'adressage dans la matrice ;
- la figure 5 représente des exemples de reconstitution de pixels détruits ;
- la figure 6 représente deux exemples de disposition des éléments de circuits d'adressage dans une matrice sans destruction de pixels ;
- la figure 7 représente différentes dispositions des éléments des circuits d'adressage et des plots de sortie dans une matrice avec destruction de pixels ;
- la figure 8 est un exemple de disposition topologique dans une matrice ;
- la figure 9 est un autre exemple de disposition topologique dans une matrice.

Dans le dispositif selon l'invention, on dispose les circuits d'adressage sous les éléments sensibles de la matrice. Cependant, ces circuits d'adressage peuvent nécessiter, essentiellement dans le cas de la prise d'images, une place plus importante que la place disponible sous les éléments sensibles, c'est-à-dire plus grande que la zone inactive. De façon avantageuse, l'invention permet, dans le cas de la prise d'images, de détruire les circuits de conditionnement de certains éléments d'images pour introduire à leur place des éléments des circuits d'adressage et éventuellement, des trous métallisés permettant la connexion des matrices à des circuits de traitements externes. Les informations réelles reçues par ces éléments d'images détériorés sont perdues ; cependant, l'invention permet de remplacer lesdites informations par des informations de remplacement, obtenues à partir des informations contenues par les éléments d'images voisins non détériorés.

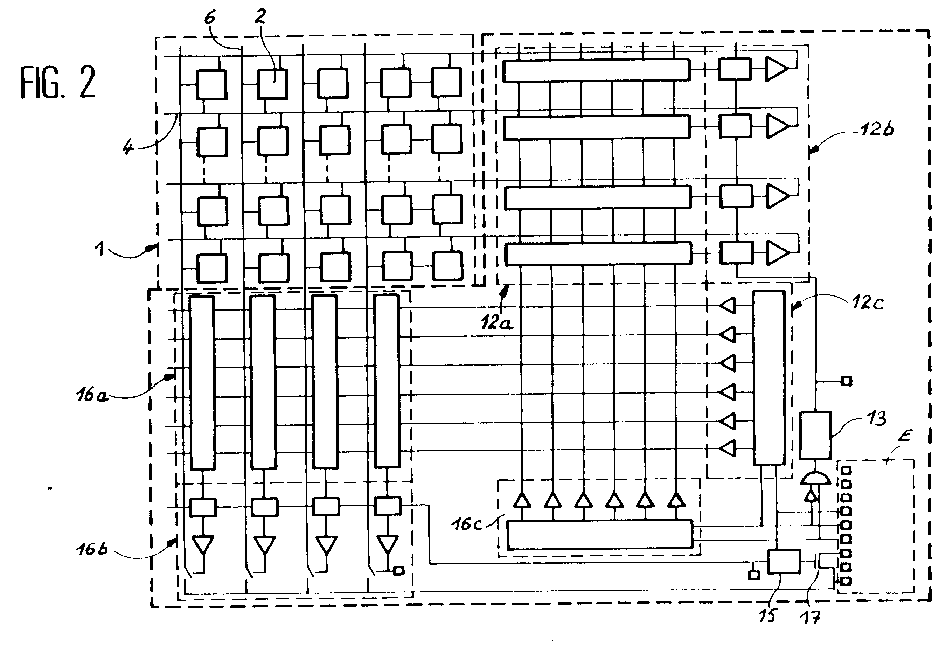

Sur la figure 2, on a représenté un exemple de matrice du commerce dont on veut implanter les circuits d'adressage sous la zone sensible.

Sur la figure 2, la plupart des références seront conservées à l'identique de celles de la figure 1. En effet, la matrice de la figure 2 a un fonctionnement semblable à celui de la matrice de la figure 1. Cependant, ses circuits d'adressage diffèrent, au moins en partie, de ceux de la matrice de la figure 1.

Ainsi, on voit sur la figure 2, la zone sensible 1 de la matrice, son circuit d'adressage lignes 12a-12c, son circuit d'adressage colonnes 16a-16c, l'horloge-ligne 13, l'horloge-colonne 15, l'amplificateur de sortie 17 et les connexions E de sortie de la matrice. De façon plus précise, le circuit d'adressage lignes se compose, pour chaque ligne conductrice 4, d'un circuit de décodage lignes 12a, d'un compteur 12c et d'un circuit 12b constitué d'un échantillonneur et d'un amplificateur. Parallèlement, le circuit d'adressage colonnes se compose, pour chaque colonne conductrice 6, d'un circuit de décodage colonnes 16a, d'un compteur 16c et d'un circuit 16b comprenant un échantillonneur et un amplificateur.

Une telle matrice comprend, au niveau de sa zone sensible 1, plusieurs éléments 2 de matrice.

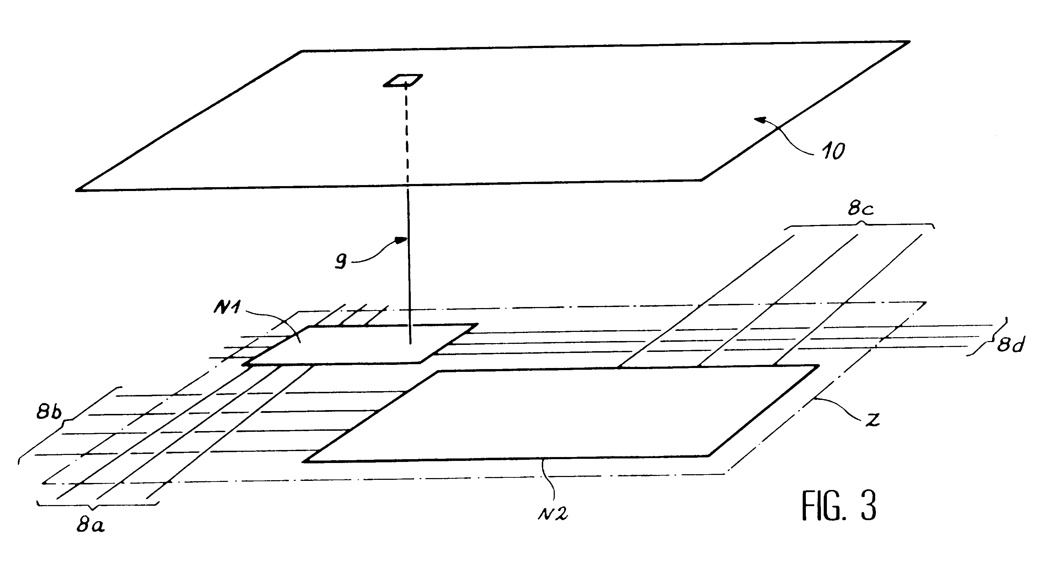

On a représenté sur la figure 3, l'un de ces éléments 2 de matrice lorsque des éléments de circuit d'adressage ont été inclus. Cet élément 2 de matrice comprend un élément sensible 10 appartenant à la zone sensible 1 citée précédemment et un circuit de conditionnement 8, l'élément sensible 10 et le circuit 8 étant reliés électroniquement par une connexion 9.

De façon plus précise, l'ensemble de la zone Z correspondant à la surface d'un pixel et situé sous l'élément 10 (qui est de taille inférieure ou égale à cette zone) comprend :
- des connexions en colonne 8a d'adressage, d'alimentation et d'initialisation du circuit 8 ;
- des connexions en ligne 8d d'adressage, d'alimentation et d'initialisation du circuit 8.

De plus, dans cette zone Z apparaissent deux zones : la zone N2 qui est naturellement inactive, c'est-à-dire qui ne comporte pas habituellement d'éléments électroniques, et la zone N1 active contenant le circuit 8 et qui peut être rendue inactive, dans certains cas, par suppression des éléments électroniques s'y trouvant, c'est-à-dire du circuit de conditionnement de l'élément sensible 10.

Dans le dispositif selon l'invention, on implante les circuits d'adressage principalement dans les zones N2 de la matrice. Sur la figure 3, on a implanté dans la zone N2 une partie du circuit d'adressage de la matrice avec, dans la zone Z, des connexions en ligne 8b de la commande d'adressage et des connexions en colonne 8c de la commande d'adressage. Pour faciliter l'implantation desdits circuits d'adressage, on découpe généralement ces circuits en sous-circuits d'adressage composés de un ou de plusieurs éléments d'adressage, de façon à implanter plus facilement lesdits sous-circuits dans les zones N2 initialement inactives de la matrice. On préfère implanter les circuits de commande d'adressage dans les zones N2 ou dans des regroupements de zones N2 car cela ne détruit pas de point de l'image. Les zones N1 rendues inactives sont dépourvues d'éléments actifs, et sont donc associées à des pixels privés de leur électronique, c'est-à-dire des pixels défectueux. L'implantation des circuits d'adressage ne se fera dans les zones N1 que dans des zones de la matrice particulièrement denses et pour y implanter, par exemple, les plots de sortie. Les zones N1 inactives doivent de plus être situées sur des pixels disjoints les uns des autres (ou alignés) pour permettre la reconstitution de l'information associée à ces pixels défectueux à l'aide des pixels voisins.

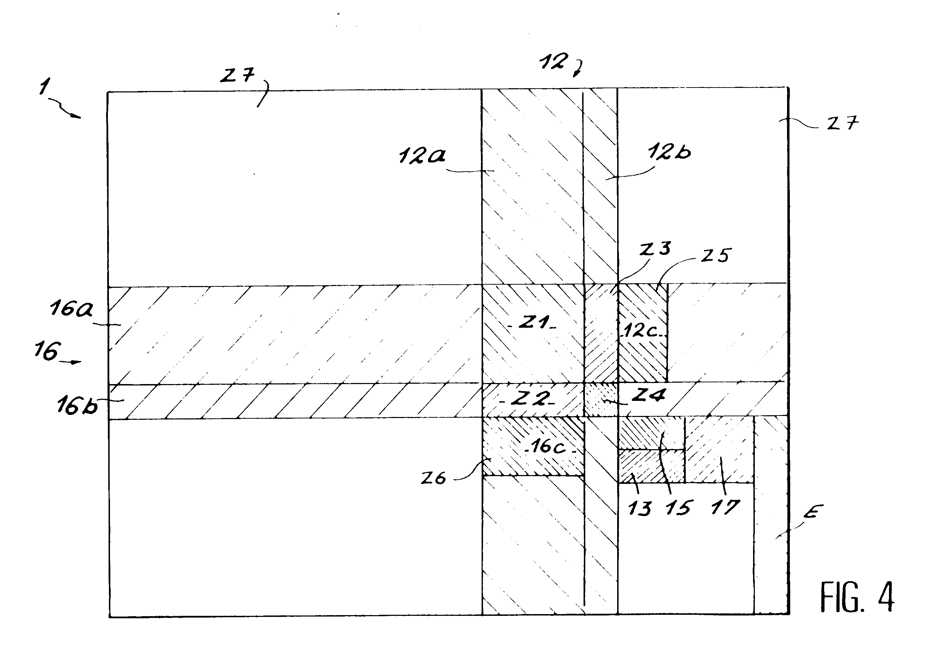

Sur la figure 4, on a représenté un exemple de disposition des circuits d'adressage dans la matrice, pour une matrice correspondant à celle de la figure 2.

L'ensemble de la figure représente la zone sensible de la matrice sous laquelle on cherche à implanter les circuits d'adressage hachurés. Le circuit d'adressage lignes, de référence 12, comporte, comme sur la figure 2, une zone contenant des circuits de décodage-lignes 12a, une zone de logique de commande-lignes 12b et une zone 12c de compteurs. De façon parallèle, les circuits d'adressage colonnes, référencés 16, comprennent une zone de circuits de décodage-colonnes 16a, une zone de logique de commande des interrupteurs-colonnes 16b et une zone 16c de compteurs. De plus, sur cette figure, on voit également la zone sensible de la matrice, c'est-à-dire la zone contenant les pixels.

On remarque sur cette figure que les zones d'adressage lignes 12a, 12b et 12c et les zones d'adressage colonnes 16a, 16b et 16c s'entrecroisent en des zones Z1, Z2, Z3, Z4, Z5 et Z6, dans lesquelles l'implantation est difficile. Au contraire, aucune implantation n'est nécessaire, a priori, sous la zone Z7. La zone Z1 reste tout de même la plus facile d'implantation parmi les zones Z1, Z2, Z3, Z4, Z5 et Z6, car les portes de décodage sont distribuées à raison d'un transistor MOS par pixel. A l'opposé, la zone Z4 est beaucoup plus délicate du point de vue implantation, du fait que la logique de commande comprend entre environ 10 à 20 transistors (par ligne ou colonne) qui ne tiennent pas dans un pixel de taille moyenne, d'environ 100 x 100 microns. Ainsi, on en déduit que pour implanter la zone Z4 sous la matrice, il faudra trouver une zone inactive de taille importante pour pouvoir implanter tous les éléments contenus dans cette zone Z4 et/ou découper la logique de commande pour la disperser sur un certain nombre de zones inactives. De même, les zones Z5, Z6, contenant 12c et 16c qui comprennent les étages de compteurs sont difficiles à implanter, des regroupements de zones N2 par 4 ou plus sont nécessaires et, dans certains cas, des zones N1 sont utilisées.

Une logique annexe contenant l'horloge-lignes 13, l'horloge-colonnes 15, l'amplificateur de sortie vidéo 17, ainsi que des plots de sortie E sont inclus dans les circuits d'adressage à implanter sous la matrice. De façon générale, les zones Z1 à Z6, représentées sur la figure 4, peuvent être implantables de façon relativement aisée à partir des zones normalement inactives éventuellement regroupées, lorsque les pixels sont d'une taille d'environ 150 x 150 microns. Au contraire, si la matrice est composée de pixels de très petite taille, environ 80 x 80 microns, ces zones Z1 à Z6 posent de sérieux problèmes d'implantation et nécessitent de "tuer" en outre, c'est-à-dire de détruire, l'électronique de pixels disjoints ou alignés afin de rendre inactives des zones actives et augmenter ainsi la surface implantable sous les éléments sensibles.

Après implantation des sous-circuits d'adressage, les informations associées à ces pixels défectueux sont reconstitués de façon à permettre une bonne visualisation de l'image.

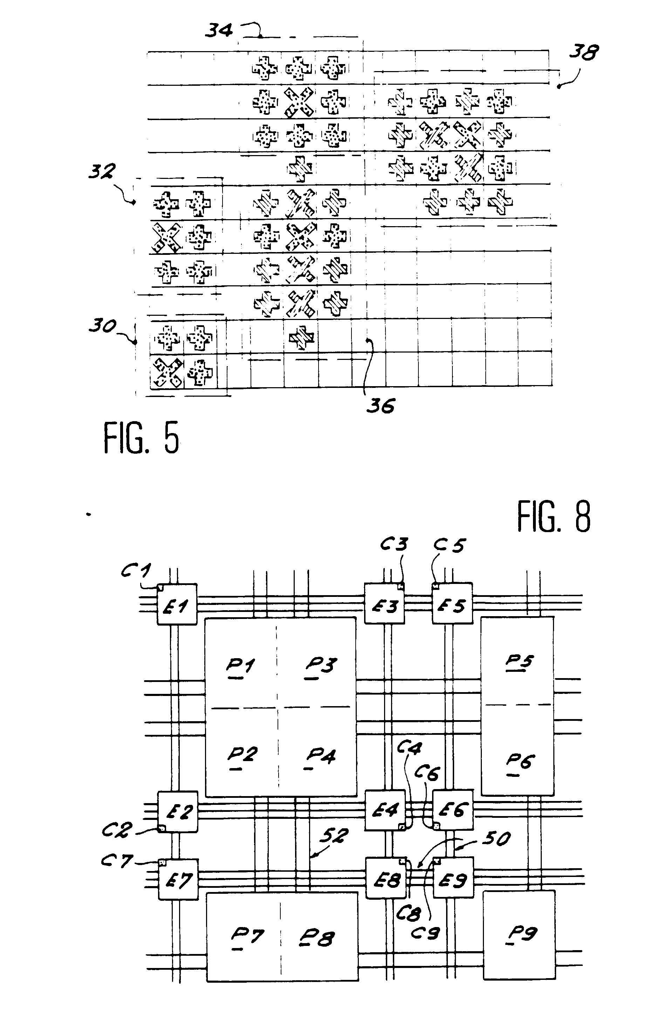

Sur la figure 5, on a représenté justement un exemple de reconstruction de pixels, c'est-à-dire qu'on a représenté une matrice contenant 10 x 12, soit 120 pixels. Parmi ces pixels, il y a à la fois des pixels intacts comportant donc les zones actives de la matrice et des pixels défectueux dont l'électronique des zones actives N1 a été détruite afin de former des zones inactives supplémentaires dans la matrice. Sur la figure, les X hachurés représentent les pixels défectueux, les croix hachurées représentent les pixels intacts, voisins des pixels défectueux. Les croix pointées représentent lesdits pixels voisins qui ont été utilisés pour reconstituer les pixels défectueux et les X pointés représentent les pixels réparés, c'est-à-dire les pixels ayant été reconstitués.

Cette reconstitution du pixel s'effectue en attribuant au pixel défectueux une information de reconstitution obtenue par moyenne des informations des pixels intacts voisins. Cette méthode est connue de l'homme de l'art et elle consiste à moyenner, par des moyens de calculs extérieurs au dispositif, des informations contenues dans les pixels intacts voisins, ces informations étant notamment la valeur de la charge reçue par lesdits pixels voisins. Ce moyen de reconstitution des pixels est utilisé lorsque les pixels défectueux se présentent sous forme de points isolés et entourés de pixels intacts, ou bien sous forme de lignes (ou colonnes) dont les lignes parallèles sont des lignes constituées de pixels intacts.

Sur cette figure 5, on a représenté différents cas dans lesquels des pixels défectueux sont réparés à partir de pixels intacts voisins. Le bloc 30 représente un pixel réparé entouré de trois pixels intacts qui ont été utilisés pour réparer le pixel, à l'origine défectueux. Le bloc 32 représente un autre exemple de pixel réparé, ce pixel étant entouré lui de cinq pixels intacts utilisés pour réparer le pixel défectueux. Le bloc 34 est un troisième exemple d'un pixel défectueux, qui a été réparé, par moyennage de huit pixels voisins intacts. Le bloc 36 est un exemple où les pixels défectueux sont en colonnes, chaque pixel défectueux étant entouré d'au moins deux pixels voisins intacts, utilisés pour le moyennage desdits pixels défectueux. Dans le bloc 36, un seul pixel défectueux a été réparé. Le bloc 38 montre également trois pixels défectueux alignés deux par deux selon respectivement une ligne et une colonne, l'un de ces pixels ayant été réparé par moyennage de quatre pixels voisins intacts disposés symétriquement les uns par rapport aux autres.

Ainsi, les circuits d'adressage qui ont été découpés en sous-circuits d'adressage peuvent être implantés dans les zones N2 normalement inoccupées et dans les zones N1 rendues inactives, c'est-à-dire les zones N1 libérées des éléments électroniques du pixel. Dans les zones particulièrement denses, telles que la zone Z4, les sous-circuits d'adressage seront implantés dans toute la surface des X hachurés et des X pointés. Ailleurs, ils seront implantés dans les zones N2, soit donc, dans une partie de la surface des autres pixels.

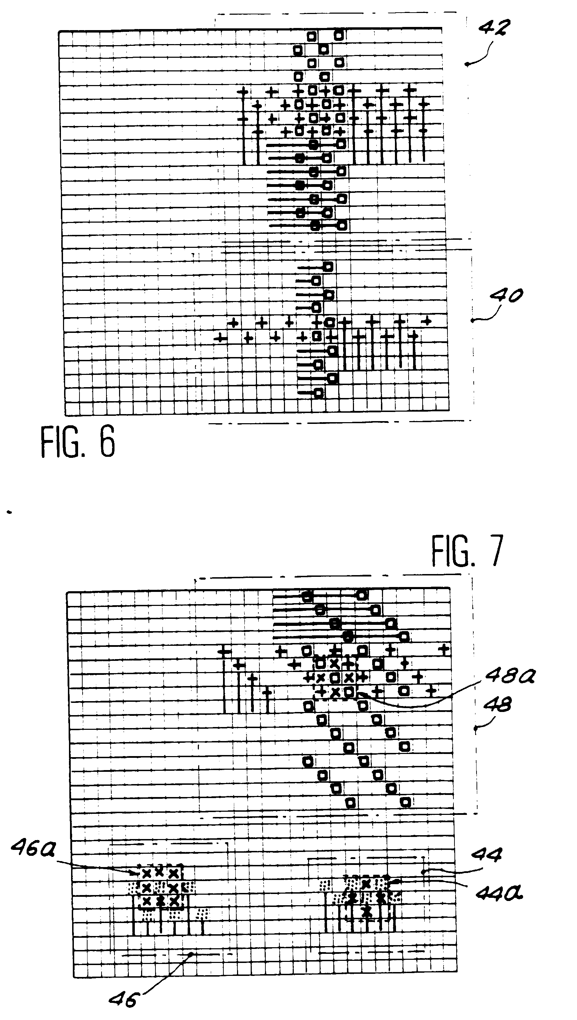

La figure 6 représente deux exemples de disposition des éléments du circuit d'adressage dans une matrice dans laquelle aucun pixel n'a été volontairement détruit. Les croix représentent des éléments du circuit d'adressage colonne et les carrés représentent les éléments du circuit d'adressage lignes. Les croix comme les carrés sont prolongés d'un trait représentant respectivement toute la colonne ou toute la ligne sur laquelle se situent lesdites croix et lesdits carrés.

Le bloc 40 montre une matrice, sous laquelle il n'y a pas lieu de détruire des pixels, les éléments de circuit d'adressage lignes et les éléments de circuit d'adressage colonnes se répartissant convenablement sous la matrice. Une telle matrice est par exemple une matrice dans laquelle les pixels ont une taille assez importante, par exemple 150 x 150 microns, pour permettre d'implanter un sous-circuit d'adressage sous un seul pixel de la matrice.

Le bloc 42 représente un autre exemple de disposition d'éléments de circuit d'adressage dans une matrice dans laquelle aucun pixel n'a été détruit. La matrice de cet exemple est peut être une matrice dans laquelle les pixels ont une taille plus faible, par exemple 100 x 100 microns, et dans laquelle la place libre sous un seul pixel ne suffit pas pour implanter un sous-circuit d'adressage. Il est donc nécessaire de réserver deux emplacements, c'est-à-dire les zones libres sous deux pixels pour implanter un seul sous-circuit d'adressage.

La figure 7 représente des exemples de dispositions des circuits d'adressage, ainsi que des plots de sortie dans une matrice où des pixels ont été détruits. Sur les trois blocs 44, 46 et 48 de la figure, les carrés simples représentent les éléments de circuit d'adressage lignes, les croix représentent les éléments de circuit d'adressage colonnes, les X représentent des pixels qui ont été moyennés pour réparer les pixels détruits et les carrés pointés représentent des plots de sortie liés à des trous métallisés pour sortie en face arrière. Les blocs 44a, 46a et 48a représentant l'ensemble des pixels utilisés pour la réparation des pixels détruits qui sont au centre de ces blocs.

Le bloc 44 représente un exemple dans lequel on voit des plots de sortie qui ont été implantés sous des pixels que l'on a volontairement détruits. Le plot de sortie au centre de la zone 44a est entouré de quatre pixels dont on a moyenné les informations afin d'attribuer l'information moyenne ainsi obtenue au pixel détruit.

Le bloc 46 représente un exemple où six plots de sortie ont été implantés sous des pixels détruits. Le plot de sortie se situant au centre de la zone de sommation représentée par la zone 46a est entouré de pixels dont les informations seront moyennées pour obtenir une information moyenne à attribuer au pixel détruit sous lequel on a implanté ledit plot de sortie.

Le bloc 48 représente des éléments de circuit d'adressage lignes, ainsi que des éléments de circuit d'adressage colonnes implantés sous des pixels détruits. La zone 48a représente trois éléments de circuit d'adressage lignes, ainsi que deux éléments de circuit d'adressage colonnes, l'un des éléments de circuit d'adressage lignes étant entouré de quatre pixels intacts qui sont moyennés pour obtenir une information à attribuer audit pixel sous lequel est implanté ledit élément de circuit d'adressage lignes.

On peut remarquer que, par rapport à la figure 6, les éléments constituant les circuits ,'adressage lignes et colonnes sont plus dispersés, de sorte qu'un pixel détruit soit entouré de pixels intacts afin de pouvoir obtenir une moyenne des informations contenues par lesdits pixels intacts, cette information moyenne étant attribuée au pixel détruit.

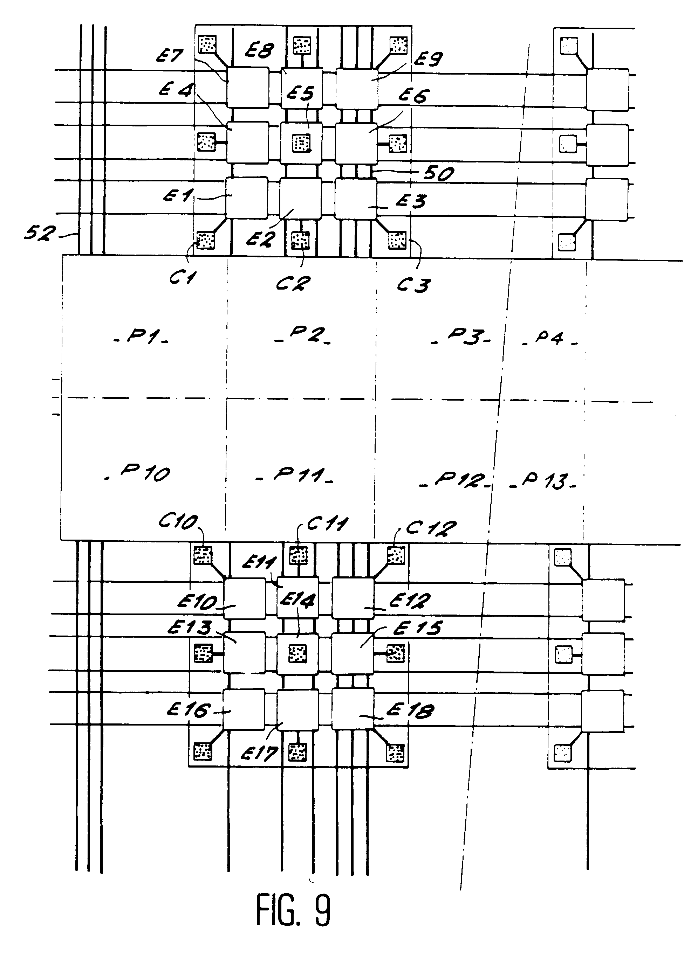

Sur la figure 8, on a représenté une disposition topologique permettant de disposer de zones inactives plus importante sous la matrice. En effet, plutôt que de découper les circuits d'adressage en très petits sous-circuits d'adressage, voire en éléments d'adressage, pour pouvoir les implanter sous les pixels, il est intéressant de regrouper les zones N2 inactives situées sous la matrice en des zones inactives de tailles plus importantes. Pour cela, on regroupe l'électronique de pixels voisins dans une même zone active afin de dégager une zone inactive plus importante, dans laquelle on implante les sous-circuits d'adressage. Ce regroupement des zones inactives permet donc de découper les circuits d'adressage moins finement, ce qui limite le nombre des interconnexions entre les différents sous-circuits d'adressage.

Sur cette figure, on voit les zones actives E3/E5, E2/E7, E4/E6/E8, E9 des pixels regroupées par quatre, dans la majeure partie de la matrice, les connexions C1, C2, C3, etc, de chaque pixel étant situées en regard des pixels voisins les plus proches et reliées par des liaisons 50 aux connexions desdits pixels voisins. Ce regroupement de quatre électroniques de pixels permet de dégager des zones N2 inactives plus importantes reliées entre elles par des liaisons 52, ces zones étant composées des zones N2 inactives P1/P2/P3/P4, P5/P6 et P7/P8. Dans de telles zones inactives, on peut implanter des sous-circuits d'adressage au moins quatre fois plus importants que les sous-circuits d'adressage que l'on aurait implantés dans une seule zone N2 (P1 ou P2 ou P3 ou ...).

La figure 9 est une représentation d'un autre exemple de disposition topologique. Dans cet exemple, on regroupe les zones N2 actives E1, E2, ..., E9 et E10, ..., E18 des pixels par neuf, et non par quatre comme sur la figure 8, afin d'obtenir une zone N2 inactive P1, P2, P3, P10, P11, P12, etc. encore plus importante que celle à disposition sur la figure 8. En fait, on crée ainsi une zone libre inactive formée de deux bandes (une bande en ligne, une bande en colonne) de largeur double par rapport à la largeur d'une zone N2 inactive). Les traits 50 représentent les liaisons entre les connexions C1, C2, C3, etc, des pixels entre eux et les traits 52 représentent les liaisons entre les circuits d'adressage.

Ainsi, les matrices décrites ci-dessus, ayant leurs circuits d'adressage implantés sous leur zone sensible, une pluralité de matrices peuvent être juxtaposées ou, plus exactement, accolées bord à bord. Les matrices sont alors reliées grâce à des connexions de sortie non représentées sur la figure et situées en face arrière de la matrice.

Un premier type de connexion de sortie consiste en une couche métallique déposée et gravée sur une partie de la face arrière et des bords de chaque matrice, qui réalise la connexion vers la face arrière de la matrice.

Un autre type de connexion de sortie consiste en un trou métallisé situé dans des pixels de la matrice, chaque trou métallisé étant électriquement relié à un fil de sortie en face arrière de la matrice. Ces trous métallisés peuvent occuper des zones N1 rendues inactives par destructions de pixels.

Il existe également plusieurs modes de réalisation des circuits d'adressage lignes et colonnes.

Un premier mode de réalisation consiste à utiliser un registre à décalage, comme la matrice représentée sur la figure 1.

Un second mode de réalisation, et mode préféré de l'invention, consiste à utiliser un compteur associé à un décodeur, ce mode ayant été représenté sur la figure 2. En effet, ce mode de réalisation, avec compteur et décodeur, est plus avantageux car il permet, dans une matrice de 1 024 x 1 024 points, de ne détruire que 10 points contre 1 024 pour un registre à décalage. De plus, même si l'utilisation d'un compteur nécessite plus de circuits de décodage qu'un registre à décalage, ces circuits de décodage sont facilement intégrables sous la zone sensible car ils sont constitués de transistors MOS en séries ou en parallèles, ces transistors étant facilement intégrables, à raison de 1 transistor par pixel.

De plus, le procédé de réparation des pixels défectueux, utilisé dans le dispositif de l'invention, est également intéressant pour réparer des points technologiquement défectueux, lorsque ces points sont facilement localisables, c'est-à-dire lorsque ces points sont soit isolés soit alignés, ce qui est très souvent le cas pour les défauts technologiques.

## Revendications

1. Dispositif de prise ou d'affichage d'images en grande dimension comprenant une pluralité de matrices de prise ou d'affichage d'images comportant des éléments sensibles (10) connectés, par des circuits de conditionnement, à des lignes (4) et des colonnes (6) conductrices, elles-mêmes connectées à des circuits d'adressage (12, 14) desdites matrices, caractérisé par le fait que ces matrices sont accolées bord à bord, les circuits d'adressage et les circuits de conditionnement d'une matrice étant intégrés sur un substrat semi-conducteur distinct de la matrice et disposés dans des zones situées sous les éléments sensibles de ladite matrice, chacune de ces zones comportant, d'une part, une zone active (N1) contenant un surcuit de conditionnement (8) et une partie d'une ligne et d'une colonne conductrices associées audit élément sensible et, d'autre part, une zone inactive (N2), les circuits d'adressage de la matrice étant, au moins en partie, implantés dans lesdites zones inactives, en ce que certaines zones actives sont rendues inactives par destruction de leur circuit de conditionnement respectif, les circuits d'adressage de la matrice étant, au moins en partie, implantés dans ces zones rendues inactives, et en ce qu'il comprend des moyens pour reconstituer des informations associées aux éléments sensibles associés à une zone rendue inactive, ces informations étant obtenues par moyenne des informations provenant des éléments sensibles voisins associés à une zone active.

2. Dispositif selon la revendication 1, caractérisé en ce que la zone inactive d'un élément sensible est assemblée avec au moins une autre zone inactive de façon à créer des zones inactives de taille sensiblement plus importante.

3. Dispositif selon la revendication 1, caractérisé en ce que la zone rendue inactive d'un élément sensible est assemblée avec au moins une autre zone rendue inactive de façon à créer des zones rendues inactives de taille sensiblement plus importante.

4. Dispositif selon l'une quelconque des revendications 1 à 3, caractérisé en ce que les circuits d'adressage des matrices sont divisés en sous-circuits d'adressage implantés dans plusieurs zones inactives et/ou zones rendues inactives.

5. Dispositif selon l'une quelconque des revendications 1 à 4, caractérisé en ce que les matrices comprennent une couche métallique gravée, recouvrant une partie de la face arrière desdites matrices et assurant une connexion électrique desdites matrices.

6. Dispositif selon l'une quelconque des revendications 1 à 4, caractérisé en ce que les matrices comprennent des trous métallisés traversant lesdites matrices et assurant une connexion électrique desdites matrices.

7. Dispositif selon la revendication 6, caractérisé en ce que les trous métallisés sont situés dans les zones rendues inactives de la matrice.

## Patentansprüche

1. Vorrichtung zur großdimensionierten Bildaufnahme oder -wiedergabe, umfassend eine Vielzahl von Bildaufnahme- oder Wiedergabematrizen, sensible Elemente (10) enthalten, durch Konditionierungsschaltungen mit leitenden Zeilen (4) und Spalten (6) verbunden, ihrerseits selbst mit Adressierungsschaltungen (12, 14) der genannten Matrizen verbunden,
**dadurch gekennzeichnet,**
daß diese Matrizen Rand an Rand zusammengefügt sind, wobei die Adressierungsschaltungen und die Konditionierungsschaltungen einer Matrix auf einem von der Matrix unterschiedlichen Halbleitermaterial integriert sind und in Zonen angeordnet sind, die sich unter den sensiblen Elementen der besagten Matrix befinden, und jede dieser Zonen einerseits eine aktive Zone (N1) umfaßt, die eine Konditionierungsschaltung (8) und einen Teil einer leitenden Zeile und einer leitenden Spalte enthält, dem genannten sensiblen Element zugeordnet, und andererseits eine inaktive Zone (N2), und die Adressierungsschaltungen der Matrix wenigstens teilweise in besagte inaktive Zonen integriert sind, dadurch, daß bestimmte aktive Zonen inaktiv gemacht werden durch Zerstörung ihrer jeweiligen Konditionierungsschaltung, die Adressierungsschaltungen der Matrix wenigstens teilweise in diese inaktiv gemachten Zonen integriert sind, und dadurch, daß sie Einrichtungen zum Wiederherstellen von Daten umfaßt, die den sensiblen Elementen zugeordnet sind, die zu einer inaktiv gemachten Zone gehören, wobei man diese Daten durch den Mittelwert der Daten erhält, die von den einer aktiven Zone zugeordneten, benachbarten sensiblen Elementen stammen.

2. Vorrichtung nach Anspruch 1, dadurch gekennzeichnet, daß die inaktive Zone eines sensiblen Elements zusammengefügt wird mit wenigstens eine anderen inaktiven Zone, um wesentlich größere inaktive Zonen zu schaffen,

3. Vorrichtung nach Anspruch 1, dadurch gekennzeichnet, daß die inaktiv gemachte Zone eines sensiblen Elements mit wenigstens einer anderen inaktiv gemachten Zone zusammengefügt wird, um wesentlich größere inaktive Zonen zu schaffen.

4. Vorrichtung nach einem der Ansprüche 1 bis 3, dadurch gekennzeichnet, daß die Adressierungsschaltungen der Matrizen unterteilt sind in Adressier-Teilschaltungen, integriert in mehrere inaktive Zonen und/oder inaktiv gemachte Zonen.

5. Vorrichtung nach einem der Ansprüche 1 bis 4, dadurch gekennzeichnet, daß die Matrizen eine geätzte Metallschicht umfassen, die einen Teil der Rückseite dieser Matrizen bedeckt und eine elektrische Verbindung dieser Matrizen sicherstellt.

6. Vorrichtung nach einem der Ansprüche 1 bis 4, dadurch gekennzeichnet, daß die Matrizen metallisierte Löcher enthalten, die diese Matrizen durchqueren und eine elektrische Verbindung dieser Matrizen sicherstellen.

7. Vorrichtung nach Anspruch 6, dadurch gekennzeichnet, daß die metallisierten Löcher sich in einer inaktiv gemachten Zone der Matrix befinden.

## Claims

1. Large image display or shooting apparatus incorporating a plurality of image display or shooting matrixes having sensitive elements (10) connected, by conditioning circuits, to conductive rows (4) and columns (6), which are themselves connected to addressing circuits (12, 14) of the said matrixes, characterized in that the said matrixes are joined edge to edge, the addressing circuits and the conditioning circuits of a matrix being integrated onto a semiconductor substrate separate from the substrate and located in areas positioned beneath sensitive elements of the said matrix, each of these areas having on the one hand an active zone (N1) containing a conditioning circuit (8) and part of a conductive row and a conductive column associated with said sensitive element and on the other hand an inactive zone (N2), the addressing circuits of the matrix being at least partly located in said inactive zones, in that certain active zones are rendered inactive by the destruction of their respective conditioning circuit, the addressing circuits of the matrix being at least partly located in said zones rendered inactive and in that it comprises means for reconstituting informations associated with the sensitive elements associated with a zone rendered inactive, said informations being obtained by means of informations coming from the neighbouring sensitive elements associated with an active zone.

2. Apparatus according to claim 1, characterized in that the inactive zone of a sensitive element is assembled with at least one other inactive zone, so as to create much larger inactive zones.

3. Apparatus according to claim 1, characterized in that the zone which has been made inactive of a sensitive element is assembled with at least one other zone made inactive, so as to create zones made inactive of a much larger size.

4. Apparatus according to any one of the claims 1 to 3, characterized in that the addressing circuits of the matrixes are subdivided into addressing subcircuits installed in several inactive zones and/or zones made inactive.

5. Apparatus according to any one of the claims 1 to 4, characterized in that the matrixes incorporate an etched metal layer covering part of the rear face of said matrixes and ensuring an electrical connection thereof.

6. Apparatus according to any one of the claims 1 to 4, characterized in that the matrixes incorporate plated-through holes traversing said matrixes and ensuring an electrical connection thereof.

7. Apparatus according to claim 6, characterized in that the plated-through holes are located in matrix zones which have been made inactive.
